# EUROPÄISCHE PATENTSCHRIFT

(11) **EP 3 189 575 B1**
(45) Veröffentlichungstag und Bekanntmachung des Hinweises auf die Patenterteilung: **01.01.2020**
(21) Anmeldenummer: 15757291.8
(22) Anmeldetag: 03.09.2015
(51) Int. Cl.: B60L 53/14, B60L 53/22, B60L 53/24, B60L 53/10, H02J 7/00, H02J 7/02

(54) **VORRICHTUNG ZUM LADEN EINES ENERGIESPEICHERS**
DEVICE FOR CHARGING AN ENERGY STORE
DISPOSITIF POUR LA CHARGE D'UN ACCUMULATEUR D'ÉNERGIE

(30) Priorität: 04.09.2014 DE 102014217703
(43) Veröffentlichungstag der Anmeldung: 12.07.2017
(73) Patentinhaber: Fraunhofer-Gesellschaft zur Förderung der angewandten Forschung e.V., 80686 München (DE)
(72) Erfinder: TRITSCHLER, Johannes, 79258 Hartheim (DE); REICHERT, Stefan, 79117 Freiburg (DE)
(74) Vertreter: Zimmermann, Tankred Klaus
(86) Internationale Anmeldenummer: PCT/EP2015/070139
(87) Internationale Veröffentlichungsnummer: WO 2016/034669

(56) Entgegenhaltungen:
- DE-A1-102011 075 927
- DE-A1-102012 206 801
- DE-A1-102014 101 610
- MEHNAZ AKHTER KHAN ET AL: "Integrated Electric Motor Drive and Power Electronics for Bidirectional Power Flow Between the Electric Vehicle and DC or AC Grid", IEEE TRANSACTIONS ON POWER ELECTRONICS, INSTITUTE OF ELECTRICAL AND ELECTRONICS ENGINEERS, USA, Bd. 28, Nr. 12, 1. Dezember 2013 (2013-12-01), Seiten 5774-5783, XP011514358, ISSN: 0885-8993, DOI: 10.1109/TPEL.2013.2258471 in der Anmeldung erwähnt
- CHRISTEN D ET AL: "Highly efficient and compact DC-DC converter for ultra-fast charging of electric vehicles", POWER ELECTRONICS AND MOTION CONTROL CONFERENCE (EPE/PEMC), 2012 15TH INTERNATIONAL, IEEE, 4. September 2012 (2012-09-04), Seiten LS5d.3-1, XP032312083, DOI: 10.1109/EPEPEMC.2012.6397481 ISBN: 978-1-4673-1970-6 in der Anmeldung erwähnt

## Beschreibung

Die vorliegende Erfindung bezieht sich auf eine Vorrichtung zum Laden eines Energiespeichers. Ausführungsbeispiele beschreiben ein kombiniertes AC-DC Schnelladesystem.

Sollen die beiden Lademöglichkeiten, AC- und DC-Ladung, in einem Fahrzeug wahlweise zur Verfügung stehen, erfolgt dies idealerweise über eine kombinierte Fahrzeugsteckvorrichtung, die sowohl AC-, als auch DC-Ladung ermöglicht. Innerhalb des Fahrzeugs wird in der Regel ein AC-Ladegerät (ein- oder dreiphasig) eingebaut und bei der wahlweisen DC-Ladung wird die DC-Ladestation direkt mit der Fahrzeugbatterie verbunden. Nachteilig hierbei ist, dass der Ladevorgang bei direkter Kopplung an die Batterie eine Leistungsbegrenzung aufgrund der Batteriespannung und der begrenzten Stromtragfähigkeit der heute verfügbaren Ladesteckvorrichtung hat. Durch die Verwendung eines DC/DC-Wandlers innerhalb des Fahrzeugs kann dieser Nachteil beseitigt werden, jedoch entstehen zusätzliche Kosten und Bauteilaufwände. Bekannte Ladevorrichtungen sind in DE 10 2011 075 927 A1 und DE 10 2012 206 801 A1 beschrieben.

Weitere Ladevorrichtungen sind in [1], [2] und [3] gezeigt. [1] zeigt einen stationären Hochleistungs-DC/DC-Wandler. Zusätzlich befindet sich innerhalb des Fahrzeugs ein DC/DC-Wandler und ein DC/AC-Umrichter, die beim Laden jedoch ungenutzt bleiben. [2] zeigt einen Motorumrichter mit Hochsetzsteller, wobei der DC/DC-Wandler auch als Tiefsetzsteller der Spannung eines DC-Busses auf die Batteriespannung genutzt wird. [3] zeigt ein Konzept, bei dem ein dreiphasiger Motorumrichter sowie die Motorinduktivitäten als DC/DC-Wandler, Motorumrichter oder zweiphasiges AC-Ladegerät verwendet werden können. Die unterschiedlichen Betriebsmodi können über eine Vielzahl von Schaltern und Kombinationen der Schalterstellungen ausgewählt werden.

EP 2114714 B1 zeigt ein Antriebssystem eines Hybrid Fahrzeugs mit einem Motor und einem Elektromotor, der das Fahrzeug mit Energie versorgt. Ferner umfasst das Antriebssystem eine erste Vorrichtung zur Energiespeicherung und eine zweite Vorrichtung zur Energiespeicherung, die jeweils elektrische Energie speichern. Ein Leistungswandler beeinflusst den Leistungsaustausch zwischen der ersten Vorrichtung zur Energiespeicherung und der zweiten Vorrichtung zur Energiespeicherung. Ferner weist der Leistungswandler eine elektronische Steuerungseinheit auf, die den Ladezustand der ersten Vorrichtung zur Energiespeicherung und der zweiten Vorrichtung zur Energiespeicherung überwacht. Ferner kann die zweite Vorrichtung zur Energiespeicherung mittels Gleich- oder Wechselspannung betrieben werden, wobei für den Wechselspannungsbetrieb zusätzliche Leistungsschalter für eine Brückenschaltung (im Vergleich zum Gleichspannungsbetrieb) benötigt werden.

Die DE 10 2014 101 610 A1 beschreibt einen Wechselrichter mit einem eingangsseitigen Gleichspannungszwischenkreis, einem Eingangsanschluss zum Anschließen einer externen Gleichstromquelle an den Gleichspannungszwischenkreis, einem dem Gleichspannungszwischenkreis wandlerlos zuschaltbaren Energiespeicher, einem Ausgangsanschluss zum Anschließen des Wechselrichters an ein externes Wechselstromnetz und einer Ladeschaltung zum Aufladen des Energiespeichers aus einer an dem Ausgangsanschluss anliegenden Wechselspannung. Der Energiespeicher ist ein kapazitiver Energiespeicher , und die Ladeschaltung lädt den kapazitiven Energiespeicher auf eine Spannung auf, die mindestens 20 % über einer Scheitelspannung der an dem Ausgangsanschluss anliegenden Wechselspannung liegt.

Der vorliegenden Erfindung liegt die Aufgabe zugrunde, ein verbessertes Konzept für einen DC-Ladevorgang zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele schaffen eine Vorrichtung zum Laden eines Energiespeichers mit einem ersten Anschluss zur Verbindung mit einer Gleichstromquelle, einem zweiten Anschluss zur Verbindung mit dem Energiespeicher und einer Parallelschaltung zwischen dem ersten und dem zweiten Anschluss, wobei die Parallelschaltung eine Zwischenkreisschaltung, eine erste und eine zweite Wandlerschaltung umfasst.

Der Erfindung liegt die Erkenntnis zugrunde, dass bei einem Anschluss einer Gleichspannungsquelle an zwei parallel geschaltete Wandlerschaltungen eine Ladeleistung eines Energiespeichers, der an dem Ausgang der Wandlerschaltungen angeschlossen ist, erhöht werden kann. Eine höhere Ladeleistung kann vorteilhaft sein, um z.B. eine Autobatterie schneller laden zu können.

Gemäß einem weiteren Ausführungsbeispiel kann die Vorrichtung einen dritten Anschluss zur Verbindung mit einer Wechselstromquelle aufweisen. Die erste Wandlerschaltung kann einen AC/DC-Wandler mit einem Schalter umfassen, der zwischen eine Hauptdrossel und eine Netzdrossel des AC/DC Wandlers geschaltet ist, wobei der AC/DC Wandler mit dem dritten Anschluss verbunden ist und wobei der Schalter ausgebildet ist, um in einem Gleichstromlademodus die Netzdrossel von der Hauptdrossel zu trennen und die Hauptdrossel mit dem zweiten Anschluss zu verbinden. Ferner kann die Vorrichtung einen Wechselstromlademodus aufweisen, in dem der Schalter ausgebildet ist, um die Netzdrossel und die Hauptdrossel zu verbinden und die Hauptdrossel vom zweiten Anschluss zu trennen. Dies bietet den Vorteil, dass beispielsweise ein an dem Elektroauto vorhandenes AC-Ladesystem mit geringen Modifikationen auch zur DC-Ladung genutzt werden kann.

Gemäß einem weiteren Ausführungsbeispiel kann der erste DC/DC-Wandler einen Motor umfassen, dessen Wicklung eine Hauptdrossel des ersten DC/DC-Wandlers bildet und einen Schalter umfasst, der ausgebildet ist, um in einem Gleichstromlademodus die Hauptdrossel mit dem zweiten Anschluss zu verbinden. Der Schalter kann ausgebildet sein, um in einem Motorbetriebsvorgang den Motor vom zweiten Anschluss zu trennen. Ferner kann der erste DC/DC-Wandler eine Brückenschaltung zwischen Zwischenkreisschaltung und Hauptdrossel umfassen, die beispielsweise auch als Antriebsumrichter dienen kann. In einem Ausführungsbeispiel kann der Motor der Antriebsmotor eines Elektrofahrzeugs sein.

Die doppelte Nutzung eines Ladegeräts zur AC- oder DC-Ladung ist vorteilhaft, da durch einen sehr geringen Mehraufwand AC-Ladegeräte auch zur DC-Ladung verwendet werden können und gleichermaßen auch ein DC-Ladegerät als AC-Ladegerät verwendet werden kann, wodurch eine erhebliche Kosten- und Bauteilersparnis im Vergleich zweier getrennter Systeme zur DC- und AC-Ladung erreicht wird. Zusätzlich können die Stromtragfähigkeit und somit die übertragene Leistung im Falle der DC-Ladung ohne erheblichen Mehraufwand wesentlich erhöht werden. Ferner können bei der Nutzung eines Motorumrichters mit DC/DC-Wandler zur DC-Ladung sehr hohe Leistungen übertragen werden, ohne dabei ein zusätzliches Ladegerät ins Fahrzeug integrieren zu müssen.

Gemäß einem weiteren Ausführungsbeispiel kann die erste und die zweite Wandlerschaltung ausgebildet sein, um einen Ladestrom der Gleichstromquelle mehrphasig zu verarbeiten.

Bevorzugte Ausführungsbeispiele der vorliegenden Anmeldung werden nachfolgend Bezug nehmend auf die beiliegenden Zeichnungen näher erläutert. Es zeigen:
- Fig. 1: ein schematisches Blockdiagramm einer Vorrichtung zum Laden eines Energiespeichers;
- Fig. 2: ein schematisches Blockdiagramm eines bekannten Wechselstromladegeräts;
- Fig. 3: ein schematisches Blockschaltbild einer Vorrichtung, ähnlich dem Ausführungsbeispiel aus Fig. 1;
- Fig. 4: ein schematisches Blockschaltbild einer Vorrichtung, die als kombiniertes AC/DC-Ladegerät ausgebildet ist;
- Fig. 5: ein schematisches Schaltbild einer Vorrichtung, die als kombiniertes AC/DC-Ladegerät ausgebildet ist;
- Fig. 6: ein schematisches Blockschaltbild eines alternativen Ausführungsbeispiels, wobei die Hauptdrossel durch zumindest eine Wicklung eines Elektromotors realisiert werden kann; und
- Fig. 7: ein schematisches Schaltbild des in Fig. 6 gezeigten Blockschaltbildes.

In der nachfolgenden Beschreibung der Figuren werden gleiche und gleichwirkende Elemente mit den gleichen Bezugszeichen versehen, so dass deren Beschreibung in den unterschiedlichen Ausführungsbeispielen untereinander austauschbar ist.

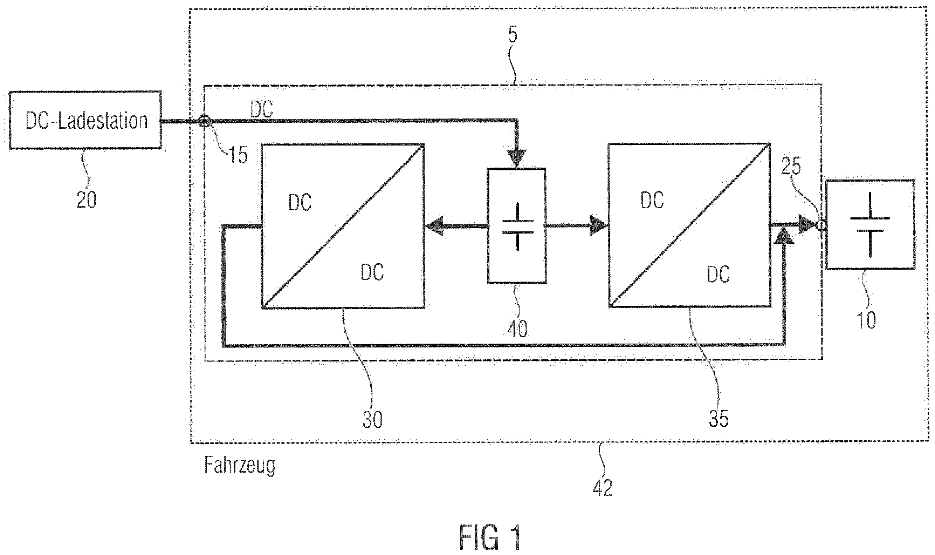

Fig. 1 zeigt ein schematisches Blockdiagramm eines Ladegeräts 5 zum Laden eines Energiespeichers 10 gemäß einem Ausführungsbeispiel der Erfindung. An einem ersten Anschluss 15 der Vorrichtung 5 ist eine Gleichstromquelle 20, z.B. eine DC-Ladestation, angeschlossen. Ferner weist die Vorrichtung 5 einen zweiten Anschluss 25 auf, an dem der Energiespeicher 10 angeschlossen ist. Das Ladegerät 5 umfasst ferner zwei Wandlerschaltungen 30, 35 zum Umwandeln einer bereitgestellten Eingangsspannung und eines bereitgestellten Eingangsstroms in eine Ausgangsgleichspannung und einen Ausgangsgleichstrom sowie eine Zwischenkreisschaltung 40. Die Wandlerschaltungen 30, 35 sind gemäß Ausführungsbeispielen DC/DC-Wandler, die ausgebildet sind, um aus der Gleichspannung und dem Gleichstrom am Eingang der Schaltung eine niedrigere Gleichspannung und einen höheren Gleichstrom am Ausgang der Schaltung zu erhalten. Die Wandlerschaltungen 30, 35 und die Zwischenkreisschaltung 40 sind parallel zueinander zwischen dem ersten und dem zweiten Anschluss 15, 25 geschaltet.

Durch den Einsatz zweier parallel geschalteter Wandlerschaltungen 30, 35, kann die verfügbare Eingangsleistung optimal zum Laden des Energiespeichers 10 genutzt werden, indem die Eingangsspannung durch die Wandlerschaltungen 30, 35 auf die Ladespannung des Energiespeichers 10 und die Eingangsstromstärke mit dem Kehrwert des Spannungstransformationsverhältnisses transformiert wird. Die Eingangsleistung muss (bei entsprechender Auslegung der Bauteile und Leitungen) nicht begrenzt werden. Dies ist nötig, wenn die Ladespannung des Energiespeichers 10 kleiner ist als die Spannung der Gleichstromquelle 20 und dieselbe ohne Wandlerschaltung an den Energiespeicher 10 angeschlossen ist. Vorteilhaft bei diesem Ausführungsbeispiel ist der beschleunigte Ladevorgang des Energiespeichers 10.

Das Ladegerät 5 kann zusammen mit dem Energiespeicher 10, beispielsweise eine Batterie oder ein Kondensator, in einem Fahrzeug 42, wie beispielsweise ein Elektroauto, eingebaut sein, wobei der erste Anschluss 15, an einer Außenseite des Fahrzeugs zum Anschluss der Gleichstromquelle 20 angebracht sein kann. Das Ladegerät 5 ist jedoch nicht auf den Einsatz in dem Fahrzeug 42 beschränkt, sondern kann vielmehr zum Laden jeglicher Energiespeicher verwendet werden. Vorteilhaft ist der Einsatz insbesondere bei Energiespeichern mit großen Kapazitäten, deren Ladevorgang durch den Einsatz einer DC-Ladestation beschleunigt werden soll.

Nachfolgend werden weitere Ausführungsbeispiele der vorliegenden Erfindung erläutert, gemäß denen die Ladevorrichtung sowohl zur AC-Ladung als auch zur DC-Ladung eines Energiespeichers, z.B. eines Elektrofahrzeugs verwendet werden kann.

Das Aufladen einer elektrischen Fahrzeugbatterie kann kabelgebunden mittels AC-Ladung (einphasig oder dreiphasig) oder DC-Ladung erfolgen. Die in Deutschland vorhandene elektrische Infrastruktur (Haushaltsanschluss) ist typischerweise dreiphasig (3 L + N) und reicht bis zu einer Leistung von 43 kW (400 V/63 A). DC-Ladesysteme benötigen ein stationäres, externes Ladesystem und werden typischerweise für höhere Ladeleistungen an verkehrsgünstigen Punkten eingesetzt. Ladeleistungen bis zu 170 kW (850 V/200 A) sind an solchen Schnellladestationen mit den existierenden Fahrzeugsteckvorrichtungen theoretisch möglich. Dies kann die Ladezeiten erheblich verkürzen. Um beide Ladevarianten abzudecken, wurde das sogenannte "Combined AC/DC Charging System" (CCS, dt.: Kombiniertes Wechsel- und Gleichstromladesystem) eingeführt. Dieses normiert Ladestecker, Ladebuchsen und Kabelverbindungen, die sowohl zur AC- als auch zur DC-Ladung verwendet werden können.

Die auf dem Markt erhältlichen und normierten DC-Steckverbindungen (IEC Layer 62196-3) beschränken sich auf Stromtragfähigkeiten von 200 A, was mit den Spannungen herkömmlicher Fahrzeugbatterien (200-400 V) bei direkter Kopplung eine maximale übertragbare Leistung von ca. 40-80 kW ergibt. Da es abzusehen ist, dass sich die Reichweiten und damit die Kapazitäten der Fahrzeugbatterien zukünftig erhöhen werden, müssen sich die Ladeleistungen gleichermaßen erhöhen, um die Ladezeiten in Grenzen zu halten. Um höhere DC-Ladeleistungen zu übertragen, muss die Spannung im Ladekabel aufgrund des auf 200 A begrenzten Stroms erhöht werden. Zur Anpassung an die niedrigeren Batteriespannungen erfordert dies eine Anpassstufe (DC/DC-Wandler) innerhalb des Fahrzeugs, z.B. in Form eines Tiefsetzstellers.

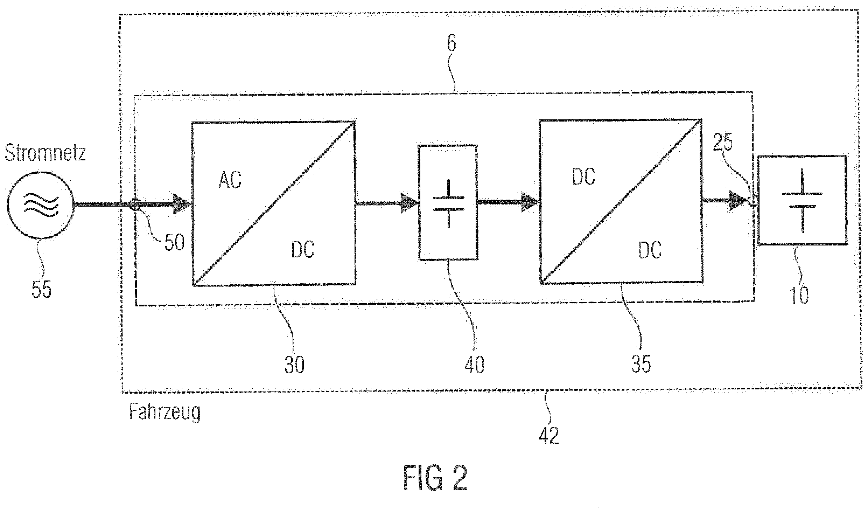

Gemäß Ausführungsbeispielen wird ein Ladegerät sowohl zur AC- als auch zur DC-Ladung eines Elektrofahrzeugs genutzt. Ein bekanntes AC-Ladegerät für ein Elektrofahrzeug, z.B. ein dreiphasiges AC-Ladegerät, ist in Fig. 2 dargestellt. Ferner kann das AC-Ladegerät auch ein-, zwei- oder mehrphasig ausgeführt sein.

Fig. 2 zeigt schematisch das Fahrzeug 42 mit dem Energiespeicher 10, einen dritten Anschluss 50 zum Anschluss an das Stromnetz 55 (AC-Quelle) und das Ladegerät 6. Das Ladegerät 6 umfasst die zwei Wandlerschaltungen 30, 35 zum Umsetzen einer Eingangsleistung in eine Gleichleistung am Ausgang. Bei dem gezeigten Ladegerät 6 umfasst die erste Wandlerschaltung 30 einen Wechsel- bzw. Gleichrichter (AC/DC-Wandler) und die zweite Wandlerschaltung 35 umfasst einen DC/DC-Wandler. Ferner ist die Zwischenkreisschaltung 40 gezeigt. Die erste und die zweite Wandlerschaltung 30, 35 und die Zwischenkreisschaltung 40 sind seriell zwischen dem zweiten und dem dritten Anschluss 25, 50 geschaltet. Gemäß Ausführungsbeispielen wird dieses bekannte Ladegerät auf die nachfolgend noch genauer beschriebene Art modifiziert, so dass eine am DC-Zwischenkreis 40 angeschlossene Gleichspannung tiefgesetzt wird und zur DC-Ladung der Speichereinheit, z.B. des Energiespeichers 10, genutzt werden kann (Fig. 1). Dabei werden mindestens eine Halbbrücke und eine Drossel aus dem AC/DC-Wandler und dem zweiten DC/DC-Wandler so parallel geschaltet, dass mindestens zwei parallele Hoch- oder Tiefsetzsteller vorhanden sind. Um die übertragbare Leistung für die DC-Ladung zu maximieren, werden gemäß Ausführungsbeispielen alle leistungselektronischen Brücken und die daran angeschlossenen Drosseln verwendet.

Bei der DC-Ladung wird gemäß Ausführungsbeispielen die Zwischenkreisschaltung 40 des AC-Ladegeräts mit einer externen DC-Spannung verbunden und der AC/DC-Wandler an seinem Eingangsfilter so umgeschaltet und mit der Speichereinheit 10 verbunden, dass er die Funktion eines DC/DC-Wandlers 30 aus Fig. 1 erfüllt, der parallel zum bereits bestehenden zweiten DC/DC-Wandler 35 betrieben wird. Somit wird unter Verwendung aller Halbbrücken und Drosseln bei der DC-Ladung mindestens die doppelte Leistung wie bei der AC-Ladung übertragen.

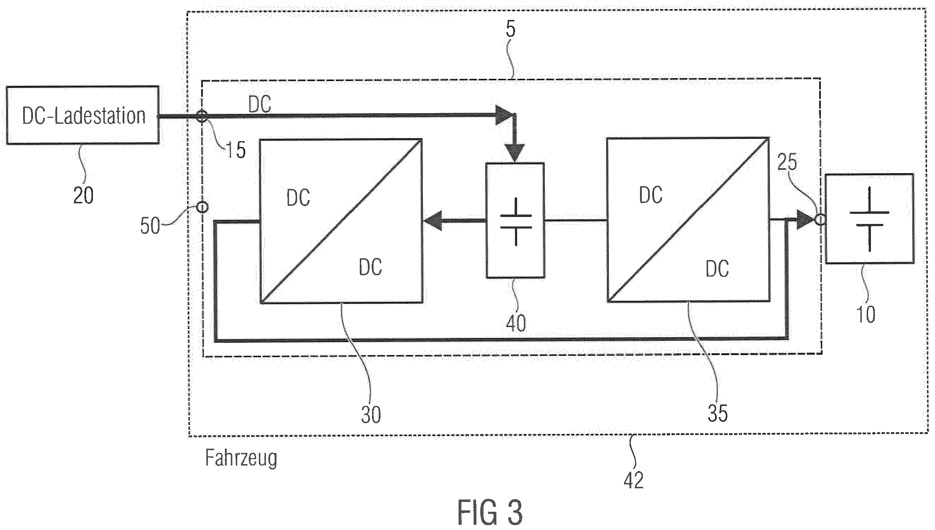

Bei einem solchen DC-Ladebetrieb ergibt sich ein Leistungsfluss, wie er durch die fett gezeichneten Pfeile in Fig. 1 dargestellt ist. Alternativ kann im DC-Ladebetrieb auch nur der umgeschaltete AC/DC Wandler (jetzt als DC/DC Wandler wirksam) verwendet werden, beispielsweise so, dass sich der in Fig. 3 durch die fett gezeichneten Pfeile dargestellte Leistungsfluss nur über die Wandlerschaltung 30 ergibt.

In Fig. 3 ist ferner dargestellt, dass das Ladegerät 5 neben dem AC-Anschluss 50 nun auch den DC-Anschluss 15 umfasst, um die DC-Leistung an die Zwischenkreisschaltung 40 anzulegen. Die erste Wandlerschaltung 30 wird im AC-Betrieb als AC/DC-Wandler und im DC-Betrieb als DC/DC-Wandler (Tiefsetzsteller) verwendet.

Gemäß Ausführungsbeispielen werden die Halbleiter und andere Komponenten des bereits im Fahrzeug vorhandenen AC-Ladesystems geschickt genutzt, so dass der Bauteil- und Kostenaufwand für ein kombiniertes Ladesystem niedrig ist. Bei quasi gleichem Aufwand kann das System somit zum AC- als auch zum DC-Laden mit sehr hohen Leistungen und einem hohen Wirkungsgrad verwendet werden.

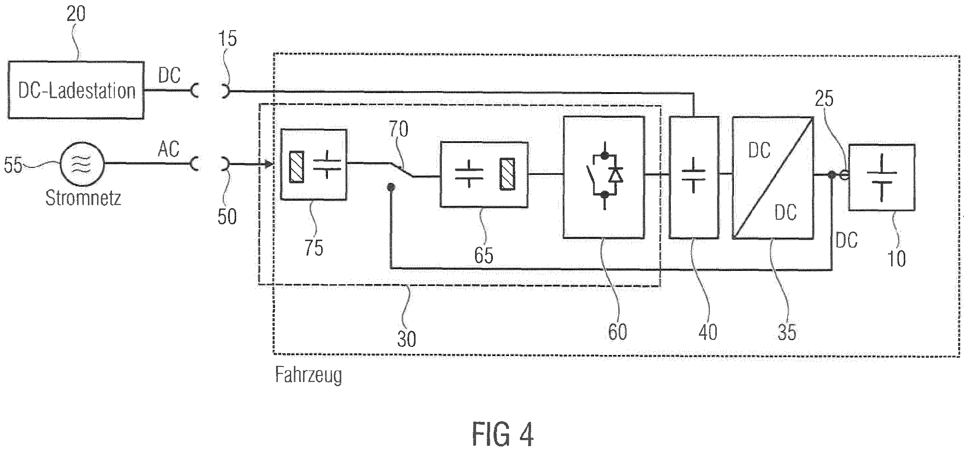

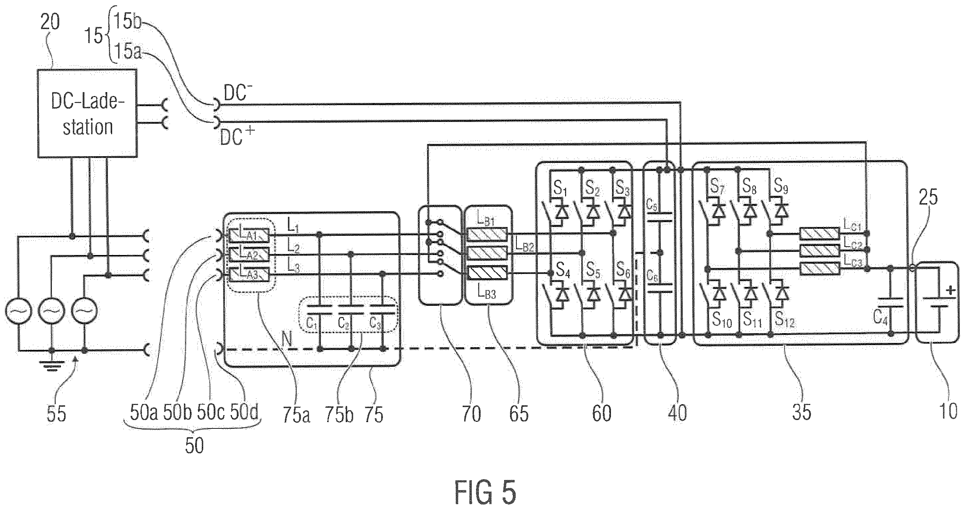

In den Fig. 4 und 5 wird das Ausführungsbeispiel eines kombinierten AC-/DC-Ladesystems gezeigt.

Fig. 4 zeigt ein schematisches Blockschaltbild des Ladegeräts 5, das als kombiniertes AC-/DC-Ladegerät ausgebildet ist. In diesem Ausführungsbeispiel kann die Leistung für das Ladegerät 5 von der Wechselstromquelle 55, z.B. dem Stromnetz, oder der Gleichstromquelle 20, die vom Stromnetz gespeist wird, bereitgestellt werden. Wie bereits beschrieben ist die Gleichstromquelle 20 mit dem ersten Anschluss 15 oder alternativ die Wechselstromquelle 55 mit dem dritten Anschluss 50 verbunden.

In einem Gleichstromlademodus, d.h. die Gleichstromquelle 20 ist mit dem ersten Anschluss 15 verbunden, bilden die erste Wandlerschaltung 30 (erster DC/DC-Wandler), die zweite Wandlerschaltung 35 (zweiter DC/DC-Wandler) und die Zwischenkreisschaltung 40 eine Parallelschaltung zwischen dem ersten Anschluss 15 und dem zweiten Anschluss 25, an dem der Energiespeicher 10 angeschlossen ist. Die erste Wandlerschaltung 30 weist einen Halbleiterschalter 60, beispielsweise eine Brückenschaltung, sowie eine daran angeschlossene Hauptdrossel 65 auf. An die Hauptdrossel 65 ist ein Schalter 70 angeschlossen, der die Hauptdrossei 65 mit dem zweiten Anschluss 25 elektrisch verbindet.

In einem Wechselstromlademodus ist die Gleichstromquelle 55 mit dem dritten Anschluss 50 verbunden. Die erste Wandlerschaltung 30 (AC/DC-Wandler), die Zwischenkreisschaltung 40 sowie die zweite Wandlerschaltung 35 (DC/DC-Wandler) sind in Reihe zwischen dem dritten Anschluss 50 und dem zweiten Anschluss 25 geschaltet, an demselben ferner der Energiespeicher 10 angeschlossen ist. Der AC/DC-Wandler umfasst eine Reihenschaltung aus der Netzdrossel 75, dem Schalter 70, der Hauptdrossel 65 sowie dem Halbleiterschalter 60. Im hier gezeigten Wechselstromlademodus kann der Schalter 70, der im vorher gezeigten Gleichstromlademodus die Hauptdrossel 65 mit dem zweiten Ausgang 25 verbunden hat, derart umgeschaltet werden, dass die Netzdrossel 75 und die Hauptdrossel 65 miteinander verbunden sind.

Mit anderen Worten kann das vorgeschlagene kombinierte Ladegerät eine Speichereinheit, z.B. den Energiespeicher 10, einen DC/DC-Wandler, z.B. die zweite Wandlerschaltung 35, einen Zwischenkreis, z.B. die Zwischenkreisschaltung 40, aktive leistungselektronische Schalter, z.B. den Halbleiterschalter 60, beispielsweise eine B6-Brücke (3-Level-Topologie) sowie einen netzseitigen Filter, der die Hauptdrossel 65 und die Netzdrossel 75 aufweist und einen oder mehrere Umschalter, beispielsweise den Schalter 70 umfassen. Der Schalter 70 ist zwischen den Filterelementen 65, 75 angeordnet. Weitere Ausführungsbeispiele, bei denen die Haupt- und/oder Netzdrossel 65, 75 nicht vorhanden ist, sind ebenfalls denkbar.

Die Netzdrossel 75 des Filters umfasst eine Drossel und in diesem Ausführungsbeispiel auch Kondensatoren. Im Wechselstromlademodus verbindet der Schalter 70 die Netzdrossel 75 (bzw. Filterelemente vor dem Schalter 70) mit der Hauptdrossel 65 (bzw. Filterelemente nach dem Schalter 70) miteinander. Das Gesamtsystem kann somit ein AC-Ladesystem umfassend einen Eingangsfilter (Hauptdrossel 65 und Netzdrossel 75), einen Wechselrichter, beispielsweise den Halbleiterschalter 60, die Zwischenkreisschaltung 40 und die zweite Wandlerschaltung 35 (DC/DC-Wandler) aufweisen. Im Fall einer DC-Ladung, wobei eine DC-Ladestation, z.B. die Gleichstromquelle 20, eine höhere Spannung als die Spannung des Energiespeichers 10 aufweist, verbindet der Schalter 70 die Hauptdrossel 65 mit dem Energiespeicher 10. Das jetzt vorliegende Gesamtsystem (im Gleichstromlademodus) erfüllt die Funktion eines oder mehrerer paralleler Tiefsetzsteller.

Fig. 5 zeigt ein schematisches Schaltbild der Vorrichtung 5, die als kombiniertes AC/DC-Ladegerät ausgebildet ist. Dieses Ausführungsbeispiel zeigt einen dreiphasigen Aufbau der Vorrichtung 5. Weitere Ausführungsbeispiele ermöglichen auch eine Realisierung mit ein, zwei, oder beliebig vielen Phasen.

Die Energieversorgung der Vorrichtung 5 erfolgt im Wechselstromlademodus über die Wechselstromquelle 55, in diesem Ausführungsbeispiel eine dreiphasige Wechselstromquelle, die an die Pole 50a, 50b, 50c, 50d des dritten Anschlusses 50 angeschlossen ist. Alternativ kann auch die Gleichstromquelle 20 an die Pole 15a, 15b des ersten Anschlusses 15 angeschlossen werden, wenn das Ladegerät 5 im Gleichstromlademodus betrieben wird. Der Gleichstromlademodus ist, wie bereits beschrieben, über die Parallelschaltung der zwischen dem ersten Anschluss 15 und dem zweiten Anschluss 25 parallel geschalteten ersten und zweiten Wandlerschaltung 30, 35 und der Zwischenkreisschaltung 40 realisiert. Die erste Wandlerschaltung 30 (DC/DC-Wandler) umfasst den Halbleiterschalter 60, der aus einer Brücke von Halbleiterschaltern S₁ bis S₆, beispielsweise einer B6-Brücke aufgebaut ist. Die Halbleiterschalter S₁ bis S₆ sind z.B. als Transistor, Thyristor oder IGBT (Insulated-gate bipolar transistor, dt.: Bipolartransistor mit isolierter Gate-Elektrode) ausgebildet. An die Mittelkontakte der B6-Brücke ist die Hauptdrossel 65 angeschlossen, die drei Induktivitäten L_{B1}, L_{B2}, L_{B3} umfasst. Die drei Induktivitäten können durch Spulen ausgebildet sein. Ferner verbindet der dreiphasiger Schalter 70 die Ausgänge der Hauptdrossel 65 mit dem zweiten Anschluss 25 der Vorrichtung 5.

Die zweite Wandlerschaltung 35 (zweiter DC/DC-Wandler) umfasst die Halbleiterschalter S₇ bis S₁₂, die wiederum eine B6-Brücke bilden. Analog zur ersten Wandlerschaltung kann der Halbleiterschalter aus einem Transistor, einem Thyristor oder ein IGBT ausgebildet sein. An den Mittelkontakten der B6-Brückenschaltung sind drei Spulen mit den Induktivitäten L_{C1}, L_{C2}, L_{C3} angeschlossen, deren Ausgang mit dem zweiten Anschluss 25 verbunden ist. Ferner ist ein Kondensator C₄ am zweiten Anschluss 25 parallel zum Energiespeicher 10 geschaltet. Der Kondensator C₄ kann ein Signal bzw. einen Stromfluss der Parallelschaltung der ersten und zweiten Wandlerschaltung 30, 35 und der Zwischenkreisschaltung 40 glätten. Die Zwischenkreisschaltung 40 umfasst einen Kondensator C₅ und einen Kondensator C₆. In weiteren Ausführungsbeispielen sind auch andere Realisierungen der Zwischenkreisschaltung 40, des ersten DC/DC-Wandlers 30 sowie des zweiten DC/DC-Wandlers 35 möglich.

Im Wechselstromlademodus ist die erste Wandlerschaltung 30 (AC/DC-Wandler), umfassend die Netzdrossel 75, den Schalter 70 und die Hauptdrossel 65 in Reihe mit dem Halbleiterschalter 60, der Zwischenkreisschaltung 40 sowie des zweiten DC/DC-Wandiers 35 zwischen den Anschlüssen 50 und 25 der Vorrichtung 5 geschaltet. Die Pole 50a, 50b, 50c des dritten Anschlusses 50 führen die Phasen L₁, L₂ und L₃ der Wechselspannungsquelle. Ferner führt der Pol 50d des dritten Anschlusses 50 den Neutralleiter. Die Netzdrossel 75 umfasst drei Netzdrosseln 75a L_{A1}, L_{A2}, L_{A3}, beispielsweise drei Spulen oder Induktivitäten, sowie drei Kapazitäten 75b C₁, C₂, C₃, beispielsweise drei Kondensatoren. Jeder Kondensator C₁, C₂, C₃ koppelt jeweils eine der drei Phasen L₁, L₂, L₃ mit dem Neutralleiter N. Den Knotenpunkt zwischen den Spulen und den Kondensatoren verbindet der dreiphasige Schalter 70 mit der Hauptdrossel 65. Der Aufbau der folgenden Komponenten (Hauptdrossel 65, Halbleiterschalter 60, Zwischenkreisschaltung 40, zweiter DC/DC-Wandler 35) wurden bereits im Gleichstromlademodus beschrieben. Anzumerken ist, dass die Hauptdrossel 65 und der Halbleiterschalter 60 im Wechselstromlademodus und im Gleichstromlademodus in unterschiedliche Richtungen betrieben werden. Gemäß weiterer Ausführungsbeispiele kann die Steuerung der Halbleiterschalter S₁ bis S₆ und S₇ bis S₁₂ von getrennten oder einer gemeinsamen Steuereinheit übernommen werden.

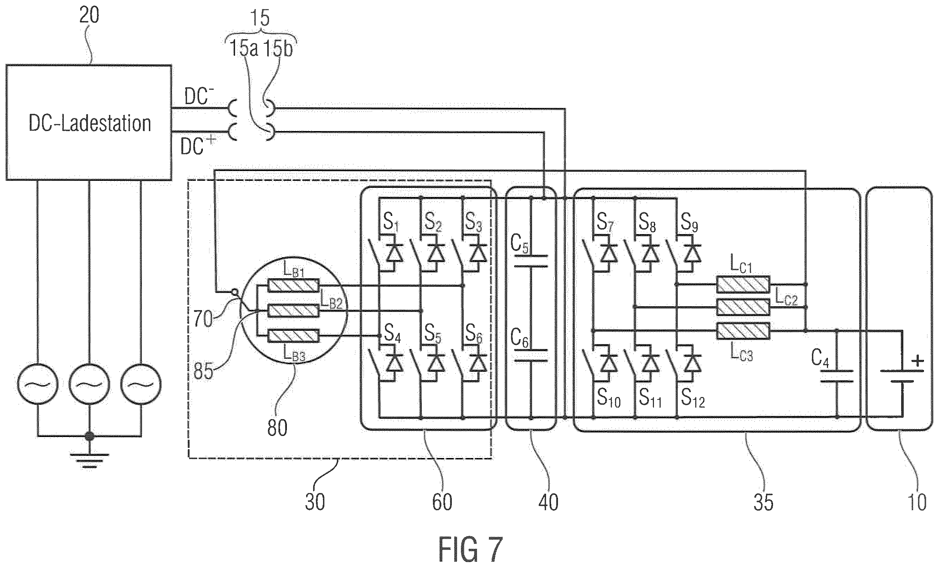

Mit anderen Worten kann das LCL-Filter durch den dreiphasigen Schalter 70 aufgetrennt werden. Das LCL-Filter umfasst die Netzdrosseln 75a L_{A1}, L_{A2}, L_{A3} und die Kondensatoren 75b C₁, C₂, C₃, die die Netzdrossel 75 des LCL-Filters bilden, sowie die Hauptdrosseln L_{B1}, L_{B2}, L_{B3}, die Hauptdrossel 65 bilden. Der Schalter 70 kann das LCL-Filter zwischen den Netzdrosseln 75a und der Hauptdrossel 65 auftrennen. Die Kondensatoren 75b können vor oder hinter dem Schalter 70 angeordnet sein. Sind die Kondensatoren 75b hinter dem Schalter 70 angeordnet, liegen dieselben im Gleichstromlademodus parallel zum Energiespeicher 10 an. Außerdem weist die Schaltung drei Halbbrücken, die im Halbleiterschalter 60 gebildet sind, die Zwischenkreisschaltung 40 und drei parallel geschaltete Tiefsetzsteller (zweite Wandlerschaltung 35) sowie den Energiespeicher 10 auf. In Fig. 7 liegen während des DC-Ladevorgangs also sechs parallele Tiefsetzsteller und während des AC-Ladevorgangs ein dreiphasiges AC-Ladegerät mit drei parallelen Tiefsetzstellern vor. Die DC-Plus- und DC-Minus-Eingänge 15a, 15b können während des DC-Ladevorgangs direkt mit dem Zwischenkreis verbunden sein.

### Dimensionierungsmöglichkeit

Angenommen wird ein dreiphasiges transformatorloses AC-Ladegerät mit einer AC-Nennleistung von 43 kW. Um den Aufbau zu vereinfachen, macht es Sinn, zwei identische B6-Brückenmodule, einmal für den Umrichter (S₁-S₆) und einmal für die mehrphasige DC/DC-Anpassstufe (S₇-S₁₂) zu verwenden.

Bei der AC-Ladung mit einer Leistung von 43 kW benötigt jeder Brückenzweig des Umrichters eine Stromtragfähigkeit von 63 A. Um die im Ausführungsbeispiel gezeigten drei Brückenzweige der DC/DC-Anpassstufe (S₇-S₁₂) optimal zu nutzen, wäre eine minimale Batteriespannung (Spannung des Energiespeichers 10) von 230 V_{DC} denkbar (I_{DC,max} = 3 x 63 A = 189 A). Die drei Tiefsetzsteller können phasenverschoben getaktet werden, um den Stromrippel zu minimieren.

Nach der Umschaltung in den DC-Ladebetrieb sind sechs parallele Tiefsetzsteller vorhanden. Die übertragbare DC-Ladeleistung beträgt nun bei 230 V Batteriespannung über 86 kW (I_{DC,max} = 6 x 63 A = 378 A), was mindestens dem Doppelten der möglichen AC-Ladeleistung entspricht.

Im Vergleich zur direkten Batterieanbindung an die DC-Ladestation kann sich die übertragbare Leistung im gezeigten Ausführungsbeispiel ca. um den Faktor 378 A/200 A = 1,9 erhöhen, da der Batterieladestrom nicht mehr direkt von der Stromtragfähigkeit (200 A) der Ladesteckvorrichtung abhängt. Da es sich bei allen Halbleiterschaltern um aktive Schalter handeln kann, ist auch eine Bidirektionalität der Schaltung gegeben.

### Alternatives Ausführungsbeispiel

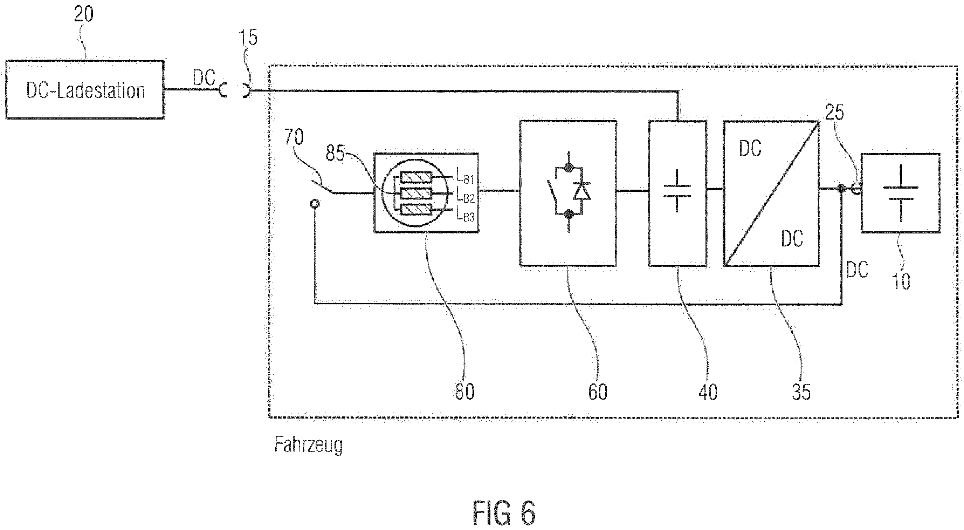

Ein weiteres Ausführungsbeispiel ist in den Fig. 6 und 7 gezeigt. Die Funktion der ersten Wandlerschaltung wird in diesem Ausführungsbeispiel von einem Elektromotor mit angeschlossenem Motorumrichter ausgeführt. Gemäß eines Ausführungsbeispiels ist der Elektromotor der Antriebsmotor eines Elektrofahrzeugs.

Fig. 6 zeigt ein schematisches Blockschaltbild des weiteren Ausführungsbeispiels, wobei die Hauptdrossel 65 aus den Fig. 4 und 5 durch die Wicklungen/Spulen eines Elektromotors 80 realisiert wird. Der Elektromotor 80 weist die drei Induktivitäten L_{B1}, L_{B2}, L_{B3} auf, die im Zweig der ersten Wandlerschaltung 30 eine dreiphasige Verarbeitung (Transformation) des Ladestroms ermöglichen. Der Schalter 70 ist in einem Motorbetriebsmodus geöffnet, so dass der Elektromotor 80 vom Energiespeicher 10, betrieben werden kann.

Ferner kann der Schalter 70 geschlossen sein, so dass der Sternpunkt 85 des Elektromotors 80 mit dem zweiten Anschluss 25 elektrisch verbunden ist.

Fig. 7 zeigt einen schematischen Schaltplan des in Fig. 6 gezeigten Blockschaltbildes. Im Vergleich zu der in Fig. 5 gezeigten Schaltung unterscheidet sich die Schaltung in Fig. 7 durch den Wegfall der Netzdrossel 75. Die Hauptdrossel 65 wird durch die Wicklungen des Elektromotors 80 ersetzt. Ferner ist der Elektromotor 80 mit dem Eingang der Wicklungen L_{B1}, L_{B2}, L_{B3} am jeweiligen Mittenkontakt der drei Brückenzweige 60 angeschlossen. Der am Ausgang der Wicklungen L_{B1}, L_{B2}, L_{B3} gebildete Sternpunkt 85 ist bei geschlossenem Schalter 70 mit dem zweiten Ausgang 25 verbunden. Bei geöffnetem Schalter 70 ist der Sternpunkt 85 vom zweiten Ausgang 25 getrennt.

Mit anderen Worten beschreibt das Ausführungsbeispiel in Fig. 7 eine Abwandlung des vorherigen Ausführungsbeispiels, das anstelle eines AC-Ladegeräts einen vorhandenen Antriebsumrichter, z.B. den Halbleiterschalter 60, bestehend aus mindestens einer dreiphasigen Brücke (B6, 3-Level-Topologie) und einem DC/DC-Wandler oder mehreren parallelen DC/DC-Wandler zwischen dem Energiespeicher 10 und der Zwischenkreisschaltung 40 zur DC-Ladung verwendet. Ist der Schalter 70 geöffnet, bildet die Schaltung einen Motorumrichter, der den Motor 80 antreibt. Ist der Schalter 70 geschlossen und wird der DC-Zwischenkreis 40 mit einer DC-Quelle 20 verbunden, kann die Schaltung aus mehreren parallelen Tiefsetzstellern bestehen, die zur DC-Ladung genutzt werden können. Die bei der DC-Ladung übertragbare Leistung kann dabei ohne weitere Überdimensionierung der Leistungselektronik auch ein Vielfaches der elektrischen Antriebsleistung erreichen. Das Umschalten vom Motor- in den DC-Ladebetrieb ist im Gegensatz zu [3] durch den Einsatz des Hochsetzstellers zwischen Zwischenkreisschaltung und Energiespeicher 10 ohne eine zusätzliche Trennung des Energiespeichers 10 von der Zwischenkreisschaltung möglich.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

### Quellen

[1] Highly efficient and Compact DC_DC Converter for Ultra-Fast Charging of electric Vehicles", D. Christen, S. Tschannen, J. Biela, ETH Zürich, 15th International Power Electronics and Motion Control Conference, EPE-PEMC 2012 ECCE Europe, Novi Sad, Serbia
[2] "Automotive Powertrain DC/DC Converter with 25kW/dm3 by using SiC Diodes.", B. Eckardt, A. Hofmann, S. Zeltner, M. Maerz, Fraunhofer Institut of integrated Systems and Device technology (IISB), Erlangen
[3] Integrated electric Motor Drive and Power Electronics for Bidirectional Power Flow between the electric Vehicle and DC or AC grid", Mehnaz Akhter Khan, Iqbal Husain, North Carolina State University, Raleigh, NC, USA and Yilmaz Sozer, University of Akron, OH, USA IEEE TRANSACTIONS ON POWER ELECTRONICS; VOL. 28, NO. 12, DECEMBER 2013

## Patentansprüche

1. Vorrichtung (5) zum Laden eines Energiespeichers (10), mit
einem ersten Anschluss (15) zur Verbindung mit einer Gleichstromquelle (20);
einem zweiten Anschluss (25) zur Verbindung mit dem Energiespeicher (10);
mit einem dritten Anschluss (50) zur Verbindung mit einer Wechselstromquelle (55); und
einer Parallelschaltung zwischen dem ersten und zweiten Anschluss (15, 25), wobei die Parallelschaltung eine Zwischenkreisschaltung (40), eine erste Wandlerschaltung (30) zum Umsetzen einer Eingangsspannung und eines Eingangsstroms in eine Ausgangsgleichspannung und einen Ausgangsgleichstrom und eine zweite Wandlerschaltung (35) umfasst;
wobei die erste Wandlerschaltung (30) einen AC/DC Wandler mit einem Schalter (70) umfasst, der zwischen eine Hauptdrossel (65) und eine Netzdrossel (75a) des AC/DC Wandlers geschaltet ist;
wobei der Schalter (70) ausgebildet ist, um in einem Gleichstromlademodus die Netzdrossel (75a) von der Hauptdrossel (65) zu trennen und die Hauptdrossel (65) mit dem zweiten Anschluss (25) zu verbinden; und
wobei der AC/DC-Wandler eine Reihenschaltung aus der Netzdrossel 75, dem Schalter 70 und der Hauptdrossel 65 umfasst und wobei die Netzdrossel mit dem dritten Anschluss verbunden ist;
wobei die zweite Wandlerschaltung einen DC/DC Wandler umfasst.

2. Vorrichtung (5) gemäß Anspruch 1, wobei der Schalter (70) ausgebildet ist, um in einem Wechselstromlademodus die Netzdrossel (75a) und die Hauptdrossel (65) zu verbinden und die Hauptdrossel (65) von dem zweiten Anschluss (25) zu trennen.

3. Vorrichtung (5) zum Laden eines Energiespeichers (10), mit
einem ersten Anschluss (15) zur Verbindung mit einer Gleichstromquelle (20);
einem zweiten Anschluss (25) zur Verbindung mit dem Energiespeicher (10); und
einer Parallelschaltung zwischen dem ersten und zweiten Anschluss (15, 25), wobei die Parallelschaltung eine Zwischenkreisschaltung (40), eine erste Wandlerschaltung (30) zum Umsetzen einer Eingangsspannung und eines Eingangsstroms in eine Ausgangsgleichspannung und einen Ausgangsgleichstrom und eine zweite Wandlerschaltung (35) umfasst;
wobei die erste Wandlerschaltung (30) einen Motor (80), und einen Schalter (70) umfasst, der ausgebildet ist, um in einem Gleichstromlademodus die Wicklung des Motors (80) mit dem zweiten Anschluss (25) zu verbinden;
wobei die zweite Wandlerschaltung einen DC/DC Wandler umfasst;
wobei die Wicklung des Motors (80) eine Hauptdrossel des ersten DC/DC-Wandlers bildet.

4. Vorrichtung (5) gemäß Anspruch 3, wobei der Schalter (70) ausgebildet ist, um in einem Motorbetriebsvorgang die Wicklung des Motors (80) von dem zweiten Anschluss (25) zu trennen.

5. Vorrichtung (5) gemäß einem der vorhergehenden Ansprüche, wobei die erste Wandlerschaltung (30) eine Brückenschaltung zwischen der Zwischenkreisschaltung (40) und dem zweiten Anschluss umfasst.

6. Vorrichtung (5) gemäß einem der vorherigen Ansprüche, wobei die erste und die zweite Wandlerschaltung (30, 35) ausgebildet sind, um einen Ladestrom der Gleichstromquelle (20) mehrphasig zu verarbeiten.

## Claims

1. A device (5) for charging an energy store (10), comprising:
a first terminal (15) for connecting to a direct current source (20);
a second terminal (25) for connecting to the energy store (10);
a third terminal (50) for connecting to an alternating current source (55); and
a parallel connection between the first and second terminals (15, 25), the parallel connection comprising an intermediate connection circuit (40), a first transducer circuit (30) for converting an input voltage and an input current to an output direct voltage and an output direct current, and a second transducer circuit (35);
wherein the first transducer circuit (30) comprises an AC/DC transducer having a switch (70) connected between a main choke (65) and a grid choke (75a) of the AC/DC transducer;
wherein the switch (70) is configured to separate the grid choke (75a) from the main choke (65) and to connect the main choke (65) to the second terminal (25) in a direct current charge mode; and
wherein the AC/DC transducer comprises a series connection made up of the grid choke 75, the switch 70 and the main choke 65 and wherein the grid choke is connected to the third terminal;
wherein the second transducer circuit comprises a DC/DC transducer.

2. The device (5) in accordance with claim 1, wherein the switch (70) is configured to connect the grid choke (75a) and the main choke (65) and to separate the main choke (65) from the second terminal (25) in an alternating current charge mode.

3. A device (5) for charging an energy store (10), comprising:
a first terminal (15) for connecting to a direct current source (20);
a second terminal (25) for connecting to the energy store (10); and
a parallel connection between the first and second terminals (15, 25), the parallel connection comprising an intermediate connection circuit (40), a first transducer circuit (30) for converting an input voltage and an input current to an output direct voltage and an output direct current, and a second transducer circuit (35);
wherein the first transducer circuit (30) comprises a motor (80) and a switch (70) configured to connect the winding of the motor (80) to the second terminal (25) in a direct current charge mode;
wherein the second transducer circuit comprises a DC/DC transducer;
wherein the winding of the motor (80) forms a main choke of the first DC/DC transducer.

4. The device (5) in accordance with claim 3, wherein the switch (70) is configured to separate the winding of the motor (80) from the second terminal (25) in a motor operating process.

5. The device (5) in accordance with any of the preceding claims, wherein the first transducer circuit (30) comprises a bridge circuit between the intermediate connection circuit (40) and the second terminal.

6. The device (5) in accordance with any of the preceding claims, wherein the first and second transducer circuits (30, 35) are configured to perform multi-phase processing of a charge current of the direct current source (20).

## Revendications

1. Dispositif (5) pour charger un accumulateur d'énergie (10), avec
une première connexion (15) pour la connexion à une source de courant continu (20);
une deuxième connexion (25) pour la connexion à l'accumulateur d'énergie (10);
une troisième connexion (50) pour la connexion à une source de courant alternatif (55); et
un circuit parallèle entre la première et la deuxième connexion (15, 25), où le circuit parallèle comporte un circuit intermédiaire (40), un premier circuit de conversion (30) destiné à convertir une tension d'entrée et un courant d'entrée en une tension continue de sortie et un courant continu de sortie et un deuxième circuit de conversion (35);
dans lequel le premier circuit de conversion (30) comporte un convertisseur de courant alternatif/continu avec un commutateur (70) qui est connecté entre une inductance principale (65) et une inductance de réseau (75a) du convertisseur de courant alternatif/continu;
dans lequel le commutateur (70) est conçu pour déconnecter, dans un mode de chargement en courant continu, l'inductance de réseau (75a) de l'inductance principale (65) et connecter l'inductance principale (65) à la deuxième connexion (25); et
dans lequel le convertisseur de courant alternatif/ continu comporte un circuit série composé de l'inductance de réseau 75, du commutateur 70 et de l'inductance principale 65, et dans lequel l'inductance de réseau est connectée à la troisième connexion;
dans lequel le deuxième circuit de conversion comporte un convertisseur de courant continu-continu.

2. Dispositif (5) selon la revendication 1, dans lequel le commutateur (70) est conçu pour connecter, dans un mode de chargement en courant alternatif, l'inductance de réseau (75a) et l'inductance principale (65) et déconnecter l'inductance principale (65) de la deuxième connexion (25).

3. Dispositif (5) pour charger un accumulateur d'énergie (10), avec
une première connexion (15) pour la connexion à une source de courant continu (20);
une deuxième connexion (25) pour la connexion à l'accumulateur d'énergie (10); et
un circuit parallèle entre la première et la deuxième connexion (15, 25), où le circuit parallèle comporte un circuit intermédiaire (40), un premier circuit de conversion (30) destiné à convertir une tension d'entrée et un courant d'entrée en une tension continue de sortie et un courant continu de sortie et un deuxième circuit de conversion (35);
dans lequel le premier circuit de conversion (30) comporte un moteur (80) et un commutateur (70) qui est disposé de manière à connecter, dans un mode de chargement en courant continu, le bobinage du moteur (80) à la deuxième connexion (25);
dans lequel le deuxième circuit de conversion comporte un convertisseur de courant continu-continu;
dans lequel le bobinage du moteur (80) constitue une inductance principale du premier convertisseur de courant continu-continu.

4. Dispositif (5) selon la revendication 3, dans lequel le commutateur (70) est conçu pour déconnecter, pendant un fonctionnement du moteur, le bobinage du moteur (80) de la deuxième connexion (25).

5. Dispositif (5) selon l'une des revendications précédentes, dans lequel le premier circuit de conversion (30) comporte un circuit en pont entre le circuit intermédiaire (40) et la deuxième connexion.

6. Dispositif (5) selon l'une des revendications précédentes, dans lequel le premier et le deuxième circuit de conversion (30, 35) sont conçus pour traiter un courant de charge de la source de courant continu (20) en plusieurs phases.
